# EUROPÄISCHE PATENTSCHRIFT

(11) **EP 3 441 216 B1**
(45) Veröffentlichungstag und Bekanntmachung des Hinweises auf die Patenterteilung: **03.11.2021**
(21) Anmeldenummer: 18170958.5
(22) Anmeldetag: 07.05.2018
(51) Int. Cl.: B29D 30/00, B29D 30/26

(54) **VORRICHTUNG ZUM EINSATZ WÄHREND DES AUFBAUS EINER REIFENKARKASSE EINES RADIALREIFENS UND VERFAHREN ZUM AUFBAU EINER REIFENKARKASSE**
DEVICE FOR USE DURING THE CONSTRUCTION OF A TYRE CARCASS OF A RADIAL TYRE AND METHOD FOR MANUFACTURING A CARCASS OF A TYRE
DISPOSITIF D'UTILISATION LORS DE LA CONSTRUCTION D'UNE CARCASSE DE PNEU D'UN PNEU RADIAL ET PROCÉDÉ DE FABRICATION D'UNE CARCASSE POUR PNEU

(30) Priorität: 08.08.2017 DE 102017213748
(43) Veröffentlichungstag der Anmeldung: 13.02.2019
(73) Patentinhaber: Continental Reifen Deutschland GmbH, 30165 Hannover (DE)
(72) Erfinder: Linne, Stefan, 30900 Wedemark (DE); Reitmann, Sebastian, 31558 Hagenburg (DE)
(74) Vertreter: Continental Corporation

(56) Entgegenhaltungen:
- EP-A1- 0 104 338
- EP-A1- 3 006 194
- EP-A2- 0 256 962
- EP-A2- 0 747 207
- WO-A1-2011/118166
- KR-B1- 101 595 487

## Beschreibung

Die Erfindung betrifft eine Vorrichtung zum Einsatz während des Aufbaus einer Reifenkarkasse eines Radialreifens auf einer Karkassbaumaschine einer Reifenaufbauanlage, welche Karkassbaumaschine einen stationären Teil mit einer Wickeltrommel und einen in Achsrichtung der Wickeltrommel verfahrbaren Teil mit einer Kernzentriervorrichtung für zwei Kerne des Radialreifens aufweist.

Eine derartige Vorrichtung ist aus der EP 1 765 581 B1 bekannt. Die Karkassbaumaschine weist eine expandierbare Wickeltrommel, zwei Balgträger mit aufblähbaren Bälgen, eine Kernzentriervorrichtung für zwei Kerne und zwei Kernsetzvorrichtungen auf, die in Achsrichtung der Wickeltrommel verfahrbar sind. Zum Positionieren der Kerne auf der Kernzentriervorrichtung wird der verfahrbare Teil der Karkassbaumaschine von der Wickeltrommel wegbewegt. Dadurch entsteht ein Freiraum zwischen der Wickeltrommel und der Kernzentriervorrichtung, so dass eine Bedienperson die Kerne auf der Kernzentriervorrichtung positionieren kann und unmittelbar nach Fertigstellung eine fertig aufgebaute Reifenkarkasse der Wickeltrommel von Hand aus entnehmen kann. Die Bedienperson ist somit an die Anlage gebunden und muss, um einen Stillstand der Anlage zu vermeiden, exakt zu zwei Zeitpunkten an der Karkassaufbaumaschine verfügbar sein, nämlich zum Positionieren von Kernen auf der Kernzentriervorrichtung für die nächste aufzubauende Reifenkarkasse und zum Entnehmen jener Reifenkarkasse, welche gerade aufgebaut wurde. Die Bedienperson hat für andere Tätigkeiten während des Aufbaus einer Reifenkarkasse nur wenig Zeit zur Verfügung.

Aus der KR 101 595 487 B1 ist eine Vorrichtung zum Aufbau eines Fahrzeugluftreifens bekannt, welche eine Trommel zum Aufbau einer Karkasse und eine weitere Trommel zum Bilden eines Gürtel-Laufstreifenpaketes aufweist. Die Vorrichtung umfasst ferner eine linear bewegliche Transfervorrichtung, die Kerne aufnehmen, transportieren und auf die Karkass-Aufbautrommel setzten kann und die weiterhin dazu ausgebildet ist, um die hergestellte Karkasse zu transportieren.

Der Erfindung liegt somit die Aufgabe zu Grunde, den Vorgang der Kernbeladung und der Karkassenentnahme ohne Bedienperson durchführen zu können, so dass diese anderen Tätigkeiten ohne Leerzeiten zu verursachen nachgehen kann. Darüber hinaus soll durch ein Automatisieren der Vorgänge Kernbeladung und Karkassenentnahme die Produktivität der Anlage gesteigert werden können.

Gelöst wird die gestellte Aufgabe mit einer Vorrichtung mit einer mehrachsigen, servomotorisch gesteuerten Transfervorrichtung mit einer Handhabungseinheit, welche in Kombination und wahlweise betätigbar einen Kerngreifer zum Transfer der Kerne aus einem Kernspeicher auf die Kernzentriervorrichtung und einen Karkassengreifer zum Erfassen und zum Transfer der aufgebauten Reifenkarkasse von der Wickeltrommel zu einer Fördereinrichtung aufweist.

Die erfindungsgemäße Transfervorrichtung gestattet es, die Vorgänge des Kernbeladens und der Karkassenentnahme miteinander zu kombinieren. Der Karkassengreifer befindet sich bereits im Bereich der Karkassbaumaschine, bei der Wickeltrommel, wenn die Kerne auf der Kernzentriervorrichtung positioniert werden. Der Karkassengreifer hat daher nur noch einen kurzen Weg zur aufgebauten Reifenkarkasse. Dadurch werden die Zykluszeit und vor allem auch die Komplexität der gesamten Maschine reduziert.

Bei einer bevorzugten Ausführungsform ist die Transfervorrichtung ein Roboter. Ein Roboter kann auf besonders variable Weise bewegt werden und daher die Transferbewegungen auf eine besonders exakte und schnelle Weise durchführen. Bei einer alternativen Ausführung ist die Transfereinrichtung eine XYZ-Verstelleinheit, welche ebenfalls den Vorteil einer variablen Beweglichkeit aufweist.

Besonders bevorzugt ist eine Ausführung der Transfervorrichtung mit mehreren, miteinander gelenkig verbundenen Armen. Die Handhabungseinheit mit dem Kerngreifer und dem Karkassengreifer ist bevorzugt am Ende eines Armes angeordnet.

Weitere Merkmale, Vorteile und Einzelheiten der Erfindung werden nun anhand der schematischen Zeichnung, die ein Ausführungsbeispiel darstellt, näher beschrieben. Dabei zeigen
- Fig. 1: eine Übersicht der Vorrichtung gemäß der Erfindung und
- Fig. 2 bis Fig. 6: die grundsätzliche Funktionsweise der erfindungsgemäßen Vorrichtung.

Fahrzeugluftreifen, insbesondere Radialreifen für Personenkraftwagen, werden üblicherweise in einem zweistufigen Verfahren bzw. mittels einer zwei Stufen aufweisenden Reifenaufbaumaschine als Rohreifen aufgebaut. In der ersten Stufe wird auf einer Karkassbaumaschine 1 beispielweise in einem Klapptrommel-Verfahren eine Reifenkarkasse aufgebaut, welche als Hauptbestandteile eine Innenschicht, eine ein- oder mehrlagige Karkasseinlage, Wulstkerne mit Kernprofilen, Wulstverstärker und Seitenwandprofile aufweist. Auf der zweiten Stufe der Reifenaufbaumaschine, die nicht Gegenstand der Erfindung ist, werden die zu einem Gürtelverband und die zu einem Laufstreifen gehörenden Reifenbauteile auf der Reifenkarkasse aufgebaut. Sämtliche erwähnten Reifenbauteile - Innenschicht, Karkasseinlage, Kerne mit Kernprofilen, Wulstverstärker, Seitenwandprofile, Gürtelverband und Laufstreifen - sind einem Reifenfachmann hinlänglich bekannt. In der nachfolgenden Beschreibung werden die mit den Kernprofilen zusammengefügten Wulstkerne, wie es im Reifenaufbau üblich ist, als "Kerne" bezeichnet.

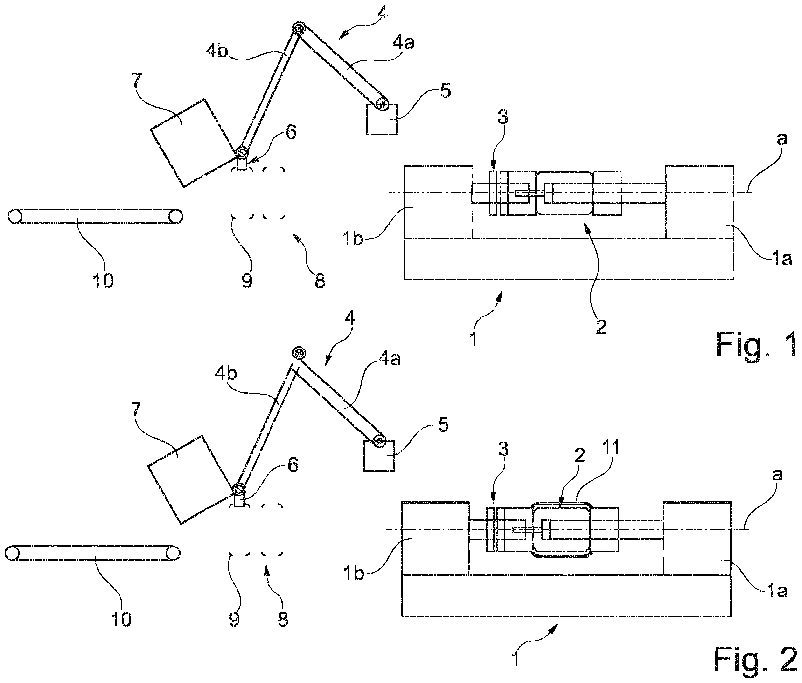

In den Figuren 1 bis 6 verdeutlicht die strichlierte Linie a die zentrale Längsachse der Karkassbaumaschine 1. Wie beispielsweise Fig. 1 sehr schematisch andeutet, gehört zu den Bestandteilen der Karkassbaumaschine 1 eine Wickeltrommel 2 und eine Kernzentriervorrichtung 3 mit linken und rechten Kernzentriersegmenten für zwei Kerne. Der Außendurchmesser der Segmente der Kernzentriervorrichtung 3 ist durch Ein- oder Ausfahren der Segmente veränderbar. Die Karkassbaumaschine 1 weist ferner zwei nicht gezeigte, entlang der Längsachse a und in Achsrichtung verfahrbar bzw. bewegbar angeordnete Kernsetzvorrichtungen auf, die in an sich bekannter Weise ausgeführt sein können. Ebenfalls nicht dargestellt sind übliche, seitlich der Wickeltrommel 2 befindliche und in an sich bekannter Weise verfahrbare Balgträger mit aufblähbaren Bälgen. Die Wickeltrommel 2 befindet sich auf einem stationären Teil der Karkassbaumaschine 1, die Kernzentriervorrichtung 3 auf einem in Richtung der Achse a von der Wickeltrommel 2 wegbewegbaren Teil lb, sodass die Kernzentriervorrichtung 3 unter Entstehen eines zur Entnahme der fertig aufgebauten Reifenkarkasse erforderlichen Freiraumes von der Wickeltrommel 2 weggefahren werden kann.

Die Figuren zeigen ferner schematisch eine mehrachsige, servomotorisch gesteuerte Transfervorrichtung 4, welche insbesondere ein Roboter ist. Die Transfervorrichtung 4 kann jedoch auch eine XYZ-Verstelleinheit sein. Von der Transfervorrichtung 4 sind beispielhaft zwei Arme 4a, 4b dargestellt, wobei der eine Arm 4a gelenkig mit einer stationären Basis 5 verbunden ist und die beiden Arme 4a, 4b miteinander ebenfalls gelenkig verbunden sind. Die gelenkigen Verbindungen sind jeweils derart, dass die Arme 4a, 4b gegeneinander und der Arm 4a gegenüber der Basis 5 beliebig bewegt bzw. gedreht werden können. Die Arme 4a, 4b können mehrteilig ausgeführt sein, beispielsweise zur Verlängerung bzw. Verkürzung ihrer Armlänge oder um weitere, gelenkig miteinander verbundene Armteile zu bilden. Am freien Endbereich des Armes 4b ist eine nicht gezeigte Handhabungseinheit vorgesehen, an welcher ein Kerngreifer 6 und ein Karkassengreifer 7 derart angeordnet sind, dass wahlweise der Kerngreifer 6 oder der Karkassengreifer 7 betätigt werden kann. Der Kerngreifer 6 ist derart gestaltet, dass er ein Paar von Kernen 9 aufnehmen und, wie noch beschrieben wird, an die Kernzentriervorrichtung abgeben kann. Die Kern 9 sind in einem Kernspeicher 8 entnahmefertig positioniert. Der Karkassengreifer 7 ist derart gestaltet, dass er eine fertig aufgebaute Reifenkarkasse von außen erfassen kann, um diese sicher zu einer eine Fördereinrichtung 10, beispielsweise einem Förderband, zu transferieren.

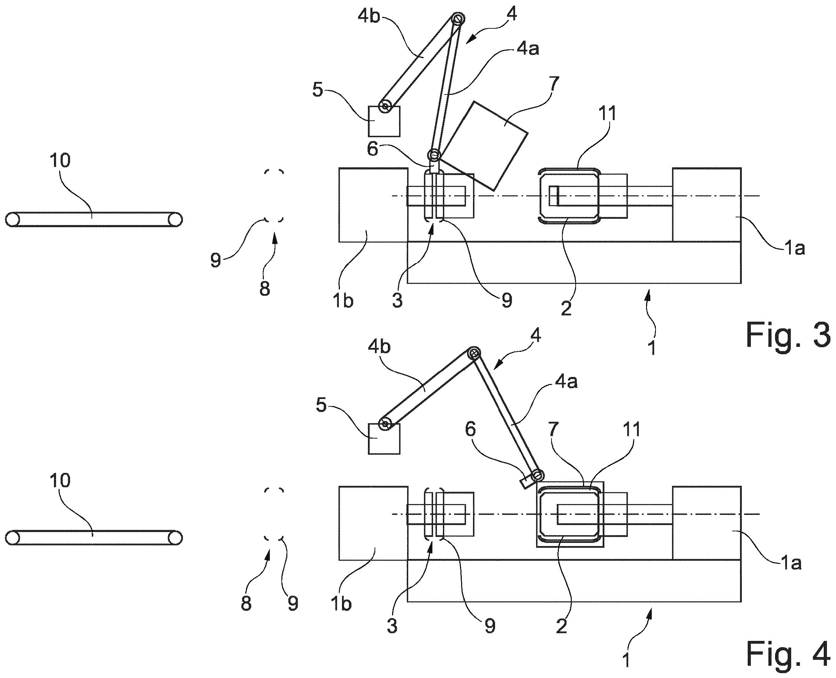

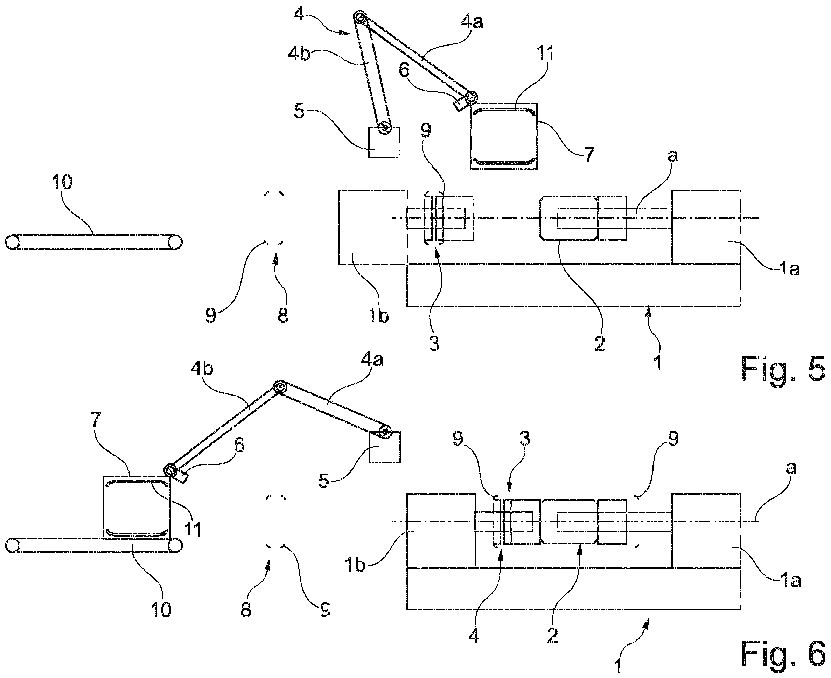

In der in Fig. 2 gezeigten Lage der Karkassbaumaschine 1 befindet sich ihr Teil 1b in seiner nicht verschobenen Ausgangslage. Auf der Wickeltrommel 2 wird aus den einzelnen Bauteilen, wie oben erwähnt, eine Reifenkarkasse 11 gewickelt, die in Fig. 2 angedeutet ist. Während des Wickelvorganges nimmt die Transfervorrichtung 4 mit ihrem Kerngreifer 6 ein Paar von Kernen 9 aus dem Kernspeicher 8 auf. Während die Reifenkarkasse 11 fertig gestellt wird, wird der Teil 1b der Karkassbaumaschine 1 von der Wickeltrommel 2 wegbewegt, wobei zwischen der Kernzentriervorrichtung 3 und der Wickeltrommel 2 ein Freiraum, wie in Fig. 3 gezeigt, entsteht, sodass die Transfervorrichtung 4 die aufgenommenen Kerne 9 auf der Kernzentriervorrichtung 3, wie es ebenfalls in Fig. 3 angedeutet ist, positionieren kann. Die Transfervorrichtung 4 verbleibt anschließend an der Karkassbaumaschine 1 in einer Warteposition. Sobald die Reifenkarkasse 11 fertig gestellt ist, fährt die Transfervorrichtung 4 den Karkassengreifer 7 über die Reifenkarkasse 11, wie es Fig. 4 zeigt, erfasst die Reifenkarkasse 11 von außen und bewegt diese entlang der Achse a in den Freiraum zwischen der Kernzentriervorrichtung 3 und der Wickeltrommel 2. Die vom Karkassengreifer 7 aufgenommene Reifenkarkasse 11 wird von der Transfervorrichtung 4 aus dem Bereich der Karkassbaumaschine 1 gehoben, wie es in Fig. 5 gezeigt ist. Der Teil 1b der Karkassbaumaschine 1 wird zurückgefahren, der nicht gezeigte rechte Kernsetzer holt den rechten Kern 9 und fährt mit diesem über die Wickeltrommel 2 zurück, Fig. 6 zeigt den rechts neben der Wickeltrommel 2 positionierten Kern 9. Während die Transfervorrichtung 4 die Reifenkarkasse 11 an die Fördereinrichtung 10 übergibt, wird auch der zweite Kern 9 vom linken Kernsetzer übernommen und an der anderen Seite der Wickeltrommel 2 positioniert. Die nächste Reifenkarkasse 11 wird in an sich bekannter Weise gewickelt bzw. aufgebaut während die Transfervorrichtung 4 wieder zwei Kerne 9 aus dem Kernspeicher 8 abholt.

### Bezugszeichenliste

- 1: Karkassbaumaschine
- 1a, 1b: Teil
- 2: Wickeltrommel
- 3: Kernzentriervorrichtung
- 4: Transfervorrichtung
- 4a, 4b: Arm
- 5: Basis
- 6: Kerngreifer
- 7: Karkassengreifer
- 8: Kernspeicher
- 9: Kern
- 10: Fördereinrichtung
- 11: Reifenkarkasse
- a: zentrale Längsachse

## Patentansprüche

1. Vorrichtung zum Einsatz während des Aufbaus einer Reifenkarkasse (11) eines Radialreifens auf einer Karkassbaumaschine (1) einer Reifenaufbauanlage, welche Karkassbaumaschine (1) einen stationären Teil (1a) mit einer Wickeltrommel (2) und einen in Achsrichtung der Wickeltrommel (2) verfahrbaren Teil (1b) mit einer Kernzentriervorrichtung (3) für zwei Kerne (9) des Radialreifens aufweist,
**gekennzeichnet durch**,
eine mehrachsige, servomotorisch gesteuerte Transfervorrichtung (4) mit einer Handhabungseinheit, welche in Kombination und wahlweise betätigbar einen Kerngreifer (6) zum Transfer der Kerne (9) aus einem Kernspeicher (8) auf die Kernzentriervorrichtung (3) und einen Karkassengreifer (7) zum Erfassen und zum Transfer der aufgebauten Reifenkarkasse (11) von der Wickeltrommel (2) zu einer Fördereinrichtung (10) aufweist.

2. Vorrichtung nach Anspruch 1, **dadurch gekennzeichnet, dass** die Transfervorrichtung (4) ein Roboter ist.

3. Vorrichtung nach Anspruch 1, **dadurch gekennzeichnet, dass** die Transfervorrichtung (4) eine XYZ-Verstelleinheit ist.

4. Vorrichtung nach einem der Ansprüche 1 bis 3, **dadurch gekennzeichnet, dass** die Transfervorrichtung (4) mehrarmig ausgeführt ist, wobei die Handhabungseinheit am Endbereich eines Armes (4a) angeordnet ist.

5. Verfahren zum Aufbau einer Reifenkarkasse mit einer Vorrichtung nach einem der Ansprüche 1 bis 4, mit folgenden nacheinander ablaufenden Schritten:
a) Aufbau einer Reifenkarkasse (11) auf der Wickeltrommel (2) der Karkassbaumaschine (1) während die Transfervorrichtung (4) mit dem Kerngreifer (6) ein Paar von Kernen (9) aus dem Kernspeicher (8) aufnimmt,
b) während der Fertigstellung der Reifenkarkasse (11) Wegbewegen des verfahrbaren Teils (1b) der Karkassbaumaschine (1) von der Wickeltrommel (2), wobei zwischen der Kernzentriervorrichtung (3) und der Wickeltrommel (2) ein Freiraum entsteht und die Transfervorrichtung (4) die aufgenommenen Kerne (9) auf der Kernzentriervorrichtung (3) positioniert,
c) Verharren der Transfervorrichtung (4) an der Karkassbaumaschine (1) in einer Warteposition,
d) nach Fertigstellung der Reifenkarkasse (11) Verfahren des Karkassgreifers (7) der Transfervorrichtung (4) über die Reifenkarkasse (11),
e) Erfassen der Reifenkarkasse (11) von außen mittels des Karkassgreifers (7),
f) Bewegen der aufgenommenen Reifenkarkasse (11) mittels der Karkassgreifers (7) entlang der Achse (a) der Wickeltrommel (2) in den Freiraum zwischen der Kernzentriervorrichtung (3) und der Wickeltrommel (2),
g) Herausheben der vom Karkassengreifer (7) aufgenommene Reifenkarkasse (11) aus dem Bereich der Karkassbaumaschine (1) mittels der Transfervorrichtung (4),
h) Zurückfahren des in Schritt b) wegbewegten Teiles (1b) der Karkassbaumaschine (1),
i) Positionieren eines Kernes (9) an der dem verfahrbaren Teil (1b) der Karkassbaumaschine (1) abgewandten Seite der Wickeltrommel (2) mittels eins ersten Kernsetzers,
j) Übergabe der Reifenkarkasse (11) an eine Fördereinrichtung (10) mittels der Transfervorrichtung (4) sowie Positionieren eines zweiten Kerns (9) an der dem verfahrbaren Teil (1b) der Karkassbaumaschine (1) zugewandten Seite der Wickeltrommel (2) mittels eines zweiten Kernsetzer und
k) Wiederholen der Schritte a) bis j).

## Claims

1. Apparatus for use during the building of a tyre carcass (11) of a radial tyre on a carcass building machine (1) of a tyre building plant, which carcass building machine (1) has a stationary part (1a), with a winding drum (2), and a part (1b) which can be moved in the axial direction of the winding drum (2) and has a core centring apparatus (3) for two cores (9) of the radial tyre, **characterized by** a multiaxial transfer apparatus (4) which is controlled by servomotor and has a handling unit which has, in combination and selectively actuably, a core gripper (6) for the transfer of the cores (9) from a core store (8) to the core centring apparatus (3), and a carcass gripper (7) for the gripping and for the transfer of the built tyre carcass (11) from the winding drum (2) to a conveying device (10).

2. Apparatus according to Claim 1, **characterized in that** the transfer apparatus (4) is a robot.

3. Apparatus according to Claim 1, **characterized in that** the transfer apparatus (4) is an XYZ adjusting unit.

4. Apparatus according to one of Claims 1 to 3, **characterized in that** the transfer apparatus (4) is configured with multiple arms, the handling unit being arranged on the end region of an arm (4a).

5. Method for building a tyre carcass with an apparatus according to one of Claims 1 to 4, with the following steps which take place consecutively:
a) building of a tyre carcass (11) on the winding drum (2) of the carcass building machine (1) while the transfer apparatus (4) receives a pair of cores (9) from the core store (8) by way of the core gripper (6),
b) moving of the movable part (1b) of the carcass building machine (1) away from the winding drum (2) during the completion of the tyre carcass (11), a clearance being produced between the core centring apparatus (3) and the winding drum (2), and the transfer apparatus (4) positioning the received cores (9) on the core centring apparatus (3),
c) pausing of the transfer apparatus (4) on the carcass building machine (1) in a waiting position,
d) moving of the carcass gripper (7) of the transfer apparatus (4) over the tyre carcass (11) after completion of the tyre carcass (11),
e) gripping of the tyre carcass (11) from the outside by means of the carcass gripper (7),
f) moving of the received tyre carcass (11) by means of the carcass gripper (7) along the axis (a) of the winding drum (2) into the clearance between the core centring apparatus (3) and the winding drum (2),
g) lifting of the tyre carcass (11) which is received by the carcass gripper (7) out of the region of the carcass building machine (1) by means of the transfer apparatus (4),
h) moving back of that part (1b) of the carcass building machine (1) which was moved away in step b) ,
i) positioning of a core (9) on that side of the winding drum (2) which faces away from the movable part (1b) of the carcass building machine (1) by means of a first core setting means,
j) transferring of the tyre carcass (11) to a conveying device (10) by means of the transfer apparatus (4), and positioning of a second core (9) on that side of the winding drum (2) which faces the movable part (1b) of the carcass building machine (1) by means of a second core setting means, and
k) repeating of steps a) to j).

## Revendications

1. Dispositif destiné à être utilisé lors de la construction d'une carcasse de pneumatique (11) d'un pneumatique radial sur une machine de construction de carcasses (1) d'un système de construction de pneumatique, laquelle machine de construction de carcasses (1) comporte une partie fixe (1a) pourvue d'un tambour d'enroulement (2) et une partie (1b) mobile dans la direction axiale du tambour d'enroulement (2) et pourvue d'un dispositif de centrage de noyau (3) destiné à deux noyaux (9) du pneumatique radial,
**caractérisé par**
un dispositif de transfert multiaxes (4) commandé par servomoteur et pourvu d'un mécanisme de manutention qui comporte, en combinaison et de manière sélectivement actionnable, un moyen de préhension de noyaux (6) destiné à transférer les noyaux (9) d'un magasin de noyaux (8) au dispositif de centrage de noyaux (3) et un moyen de préhension de carcasses (7) destiné à saisir et transférer la carcasse de pneumatique montée (11) du tambour d'enroulement (2) à un mécanisme de transport (10).

2. Dispositif selon la revendication 1, **caractérisé en ce que** le dispositif de transfert (4) est un robot.

3. Dispositif selon la revendication 1, **caractérisé en ce que** le dispositif de transfert (4) est une unité de réglage XYZ.

4. Dispositif selon l'une des revendications 1 à 3, **caractérisé en ce que** le dispositif de transfert (4) est réalisé avec plusieurs bras, le mécanisme de manutention étant disposé au niveau de la zone d'extrémité d'un bras (4a).

5. Procédé de construction d'une carcasse de pneumatique à l'aide d'un dispositif selon l'une des revendications 1 à 4, ledit procédé comprenant les étapes successives suivantes :
a) monter une carcasse de pneumatique (11) sur le tambour d'enroulement (2) de la machine de construction de carcasses (1) tandis que le dispositif de transfert (4) reçoit à l'aide du moyen de préhension de noyaux (6) une paire de noyaux (9) provenant du magasin de noyaux (8),
b) lors de l'achèvement de la carcasse de pneumatique (11), éloigner du tambour d'enroulement (2) la partie mobile (1b) de la machine de construction de carcasse (1), un espace libre étant généré entre le dispositif de centrage de noyaux (3) et le tambour d'enroulement (2) et le dispositif de transfert (4) positionnant les noyaux reçus (9) sur le dispositif de centrage de noyaux (3),
c) laisser le dispositif de transfert (4) sur la machine de construction de carcasses (1) dans une position d'attente,
d) après l'achèvement de la carcasse de pneumatique (11), déplacer le moyen de préhension de carcasses (7) du dispositif de transfert (4) sur la carcasse de pneumatique (11),
e) saisir la carcasse de pneumatique (11) de l'extérieur à l'aide du moyen de préhension de carcasses (7),
f) déplacer la carcasse de pneumatique reçue (11) à l'aide du moyen de préhension de carcasses (7) le long de l'axe (a) du tambour d'enroulement (2) jusque dans l'espace libre ménagé entre le dispositif de centrage de noyau (3) et le tambour d'enroulement (2),
g) soulever la carcasse de pneumatique (11) reçue par le moyen de préhension de carcasse (7) hors de la zone de la machine de construction de carcasses (1) à l'aide du dispositif de transfert (4),
h) ramener la partie (1b) de la machine de construction de carcasses (1) qui a été éloignée à l'étape b),
i) positionner un noyau (9) à l'aide d'un premier moyen de placement de noyaux du côté du tambour d'enroulement (2) qui est opposé à la partie mobile (1b) de la machine de construction de carcasses (1),
j) transférer la carcasse de pneumatique (11) vers un mécanisme de transport (10) à l'aide du dispositif de transfert (4) et positionner un deuxième noyau (9) du côté du tambour d'enroulement (2) qui est dirigé vers la partie mobile (1b) de la machine de construction de carcasses (1) à l'aide d'un deuxième moyen de placement de noyaux et
k) répéter les étapes a) à j).
